# NEUE EUROPÄISCHE PATENTSCHRIFT

(11) **EP 0 445 671 B2**
(45) Veröffentlichungstag und Bekanntmachung des Hinweises auf die Entscheidung über den Einspruch: **09.12.1998**
(45) Hinweis auf die Patenterteilung: 02.06.1993
(21) Anmeldenummer: 91103129.2
(22) Anmeldetag: 01.03.1991
(51) Int. Cl.: G01M 17/00

(54) **Verfahren sowie Verwendung einer Vorrichtung zum èberprüfen von Wirkungen eines Kraftfahrzeug-Unfalles**
Procedure as well as use of a device for investigating the effects of a motor vehicle accident
Procédé aussi bien que l'utilisation d'un dispositif d'investigation des effets d'un accident de véhicule

(30) Priorität: 01.03.1990 DE 4006433
(43) Veröffentlichungstag der Anmeldung: 11.09.1991
(73) Patentinhaber: Technischer Überwachungs-Verein Bayern Sachsen e.V., 80686 München (DE)
(72) Erfinder: Hupfer, Peter, Dr.-Ing., W-8000 München 21 (DE)
(74) Vertreter: Barske, Heiko, Dr. rer. nat.

(56) Entgegenhaltungen:
- MECHANICAL ENGINEERING, Band 107, Nr. 10, Oktober 1985, Seiten 63-68, New York, US; W.S. REED et al.: "Simulating vehicular collisions"
- MESSEN + PRÜFEN, Oktober 1979, Seiten 785-790, Wörishofen, DE; M. KRAMER: "Integrierte Datanerfassung und -verarbeitung im Fahrzeugsicherheitsversuch"
- ATZ AUTOMOBILTECHNISCHE ZEITSCHRIFT, Band 76, Nr. 9, September 1974, Seiten 277-284, Stuttgart, DE; K.-E. HAILER et al.: "Forschungen und Entwicklungen am Automobil 1974 - Bericht vom XV. FISITA-Kongress in Paris - Teil 1"
- ATZ AUTOMOBILTECHNISCHE ZEITSCHRIFT, Band 66, Nr. 7, Juli 1964, Seiten 203-209, Stuttgart, DE; E. FIALA et al.: "Methoden und Einrichtungen für Unfallversuche"
- ATZ AUTOMOBILTECHNISCHE ZEITSCHRIFT, Band 82, Nr. 10, Oktober 1980, Seiten 507-511, Stuttgart, DE; W. SIEVERT: "Die Aufprall-Versuchsanlage der Bundesanstalt für Strassenwesen"
- Tü 17, 1976, Seiten 94-97, H. Schneider, Crashversuche mit PKW zur Kontrolle der mathematischen Rekonstruktion realer Unfälle
- H. Burg, M. Lindemann, "Unfallversuche" , PKW-PKW-Kollisionen Grundlagenuntersuchung, 1982 (DE), Seiten 9, 13-15
- Aufsatzsonderdruck aus ATZ 1985, F. A. Berg, Unfallsimulation mit zwei Nutzfahrzeugen, Seiten 2-8
- Bericht über einen Vortrag von H.H. Domann et al., in ATZ 76, 1974, Seiten 283-284, "Ein System zur automatischen Fahrzeugführung"
- Aus dem Workshopberichtband "Prometheus", Wolfsburg (DE), Mai 1989, Pilot cable technology: State of the art and additional use, von W. Pöttig und R. Richter, Seiten 91-118
- Aufsatzsonderdruck aus Elektronik 1984, A. Schmidt et al., Elektronisch gelenkter Bus, 6 Blatt
- Verkehr und Technik, 1988, Seiten 405-408, G. Proker und E. Hipp, Spurbusse
- Aus dem Kongressberichtsband Fisita, Paris 1974, Seiten 550-553, H.H. Domann et al., Ein System zur automatischen Fahrzeugführung

## Beschreibung

Die Erfindung betrifft ein Verfahren sowie die Verwendung einer Vorrichtung zum Überprüfen von Wirkungen eines Kraftfahrzeug-Unfalls.

In der Automobilindustrie werden mit Crash-Tests neue Fahrzeuge auf ihre Verformung hin überprüft. Dabei werden die Kraftfahrzeuge bewegt und kollidieren mit einem Hindernis. Das Hindernis selbst kann dabei in Ruhe, aber auch ein zweites sich bewegendes Kraftfahrzeug sein. Die simulierenden Unfälle entsprechen dabei Kraftfahrzeug und Fahrzeuginsassen besonders gefährdenden Unfällen, wie z.B. ein Überschlag des Fahrzeugs. Hauptsächlich werden die durch Unfallstatistik bekannten häufigsten Unfälle simuliert, wie z.B. Auffahrunfälle, frontales oder seitliches Zusammenstoßen und Aufprall von verschiedenen Kraftfahrzeugen unter verschiedenen Winkeln.

Während und nach dem simulierten Unfall werden Belastungen und Schäden auf Fahrzeuginsassen (Dummy) und Kraftfahrzeuge registriert und zur Verbesserung von aktiver und passiver Sicherheit der Insassen ausgewertet. Teilweise dienen die Crash-Tests auch als Test und Kontrolle von durch Computerberechnung und -simulation hergestellten Kraftfahrzeugen.

In der DE-OS 32 48 192 wird dagegen eine Vorrichtung beschrieben, die Daten eines Kraftfahrzeuges vor einem Unfall registriert und die, wie bei Flugzeugen der Flugschreiber, im wesentlichen als Unfallschreiber bei einem tatsächlichen Unfall eingesetzt werden kann. Daten für Geschwindigkeit, Bremsbetätigung, Hupe, Blinker usw. werden registriert und sollen im Falle eines Unfalls Auskunft über z.B. falsche Betätigungen eines Blinkers oder zu hohe Geschwindigkeit geben und dabei bei der Schuldfrage zu Rate gezogen werden. Es werden immer nur die Daten über ein Fahrstrecke der letzten 200 Meter registriert und alle Daten, die eine Strecke von mehr als 200 Metern betreffen, werden gelöscht.

Der Unfallschreiber nach der DE-OS 32 48 192 ist für eine Nachstellung von Unfallhergängen nicht geeignet. Er liefert nur Daten über einen schon vollzogenen Unfall. Eine Überprüfung von verschiedenen Einflußfaktoren auf den Unfall kann mit dieser Vorrichtung nicht vollzogen werden.

Aus dem Artikel "Crashversuche mit Pkw zur Kontrolle der mathematischen Rekonstruktion realer Unfälle", abgedruckt in TÜ 17 (1976), Nr. 3, März, Seiten 94-97, ist es bekannt, auf der Basis der unter Versuchsbedingungen praktikablen Variierbarkeit von Fahrzeugtyp, Geschwindigkeit und Kollisionsstellung im Hinblick auf die reale Unfallhäufigkeit vergleichbare Unfälle zu simulieren, um den mit der praktischen Unfallanalyse befaßten Sachverständigen ein praxisnahes Mittel an die Hand zu geben. In dem genannten Artikel wird ein Pkw mit arretierter Lenkung von einem leistungsstarken Fahrzeug angeschoben und auf vorher eingeschränkten Kollisionskurs gebracht. Die Möglichkeit einer Richtungskorrektur ist lediglich durch das von einem Versuchsfahrer gelenkte Schiebefahrzeug gegeben, das vor der Kollision rechtzeitig abgebremst bzw. aus dem Gefahrenbereich gelenkt wird. Diese Anordnung läßt nur außerordentlich begrenzte Richtungskorrekturen zu bzw. ermöglicht es nur außerordentlich schwierig, einen Kollisionspunkt unter genauer Vorgabe der Auftreffgeometrie anzufahren. Des weiteren ist die Kollisionsgeschwindigkeit nur mit begrenzter Genauigkeit vorgebbar, da das Schiebefahrzeug rechtzeitig vor der Kollision aus dem Gefahrenbereich gebracht werden muß, so daß das mit arretierter Lenkung rollende kollidierende Fahrzeug über eine nicht unbeträchtliche Mindeststrecke frei rollt.

In dem Aufsatz "Methoden und Einrichtungen für Unfallversuche" in ATZ 66/7, Seiten 203-209, wird darauf hingewiesen, daß bei Crashtests Fahrzeuge von ihrem eigenen Motor angetrieben werden können, wobei dann wegen der erforderlichen langen Anlaufstrecken bis zu einem Crash eine Fernsteuerung erforderlich ist. Wie im einzelnen unter dem Antrieb mit eigenem Motor die Anfahrt zur Kollision gesteuert oder geregelt wird und wie die Fernsteuerung aufgebaut ist, ist dem Artikel nicht entnehmbar. Die dort beschriebenen Versuche werden dadurch ausgeführt, daß als eigener Motor eine Heißwasserrakete mit vorberechnetem Impulsinhalt eingesetzt wird und das von der Rakete angetriebene Fahrzeug mittels Schiene und Führungsrolle gelenkt wird.

Eine Eigenart aller bisher bekannten Verfahren bzw. Vorrichtungen zur Durchführung von Fahrzeugunfällen liegt darin, daß es nicht möglich ist, einen konkreten Unfall im Hinblick auf beteiligte Fahrzeuge, Fahrzeuggeschwindigkeit, Fahrtrichtung usw. nachzubilden. Beim Crash-Test wird nur ein Unfall herbeigeführt, um die Wirkungen auf das Kraftfahrzeug zu überprüfen. Es wird kein im Verkehrsgeschehen tatsächlich stattgefundener Unfall nachgestellt, sondern immer nur ein durch die Unfallstatistik vorgegebener allgemeiner Unfall.

Im Kongreßbericht zum "XV. Congres International FISITA", Seiten 550-554, ist ein System zur automatischen Fahrzeug-Führung beschrieben. Mit solchen Systemen zur automatischen Fahrzeugführung sbllen der Beifahrer oder für spezielle Einsatzfälle der Fahrer eingespart werden, soll das Unfallrisiko vermindert werden und die Kapazität der Straße besser ausgelastet werden. Ein Lkw ist mit einem Lenkregler, einer Geschwindigkeitsregelung und einem Sicherheitssystem ausgerüstet. Der Lenkregler besteht darin, daß unter der Fahrbahnoberfläche ein mit 10 kHz gespeistes Leitkabel verlegt ist, dessen Feld von einer am Fahrzeug befestigten Spule abgetastet wird, wobei in Abhängigkeit vom Abtastsignal die Lenkung derart geregelt wird, daß das Fahrzeug dem Leitkabel folgt. Der Geschwindigkeitsregler erhält seinen Ist-Wert als Impulsfolge von einem fahrzeugfesten Drehzahlgeber. Zur Vorgabe der Soll-Geschwindigkeit wird eine elektronische Umschaltung zwischen Stillstand und zwei programmierbaren Festgeschwindigkeiten gewählt, die über das Leitkabelsignal eingespeist werden. Der anstehende Soll-Wert wird einer Regelschaltung zugeführt, die je nach Abweichung zum Beschleunigen oder leichten Verzögern den Regler einer Dieseleinspritzpumpe verstellt oder Proportionalventile eines Bremskreises ansteuert. Das Sicherheitssystem enthält ein Abstandsradar, das bei zu großer Annährung an ein vorausfahrendes Fahrzeug durch Eingriff in das Fahrsystem die Soll-Geschwindigkeit vermindert oder im Gefahrenfall eine Vollbremsung einleitet. Eine Verwendung der beschriebenen Vorrichtung zur Durchführung irgendwelcher Crashtests ist naturgemäß nicht vorgesehen, da die Vorrichtung ja mit zur Vermeidung von Unfällen dienen soll. Die Einspeisung von Soll-Werten der Geschwindigkeit erfolgt ausschließlich über das Leitkabel, wobei diese Soll-Werte gegebenenfalls durch das Abstandsradar außer Kraft gesetzt werden.

Der Erfindung liegt die Aufgabe zugrunde, ein Verfahren zum Überprüfen von Wirkungen eines Kraftfahrzeugunfalls zu schaffen, mit welchem es möglich ist, einen tatsächlich sich ereigneten Unfall im Hinblick auf beispielsweise Fahrgeschwindigkeit und Fahrtrichtung längs eines aus der Praxis vorgegebenen Fahrwegs nachzubilden. Der Erfindung liegt weiter die Aufgabe zugrunde, eine Vorrichtung bzw. deren Verwendung anzugeben, mit der eine solche Überprüfung möglich ist.

Der das Verfahren betreffende Teil der Erfindungsaufgabe wird durch die Merkmale des Patentanspruchs 1 gelöst.

Bei dem erfindungsgemäßen Verfahren kann wegen des Eigenantriebs des Fahrzeugs und der bordeigenen Regelung ein vorbestimmter Verlauf der Fahrzeuggeschwindigkeit sowie der Fahrzeugrichtung nachgebildet werden, wie er aufgrund der Aussage von Unfallzeugen, Unfallbeteiligten oder Experten kurz vor dem Unfall gewesen sein soll. Der Unfall kann dabei nicht nur bezüglich der verwendeten Kraftfahrzeuge und Fahrparameter nachgebildet werden, sondern auch am Unfallort, auf dem konkreten Straßenstück des Unfallhergangs unter Berücksichtigung der beim Unfall vorherrschenden, besonderen Umwelteinflüsse, wie z.B. nasse oder glatte Fahrbahn oder auch Fahrbahnoberflächenunterschiede.

Somit werden bei dem erfindungsgemäßen Verfahren ein oder mehrere fahrerlose Fahrzeuge unter eigenem Antrieb durch bordeigene Regelung von Geschwindigkeit und Fahrtrichtung zur Nachbildung eines tatsächlich stattgefundenen Unfalls auf einem aus der Praxis vorgegebenen Fahrweg, gegebenenfalls unter Einfluß von Umwelteinflüssen, Auf diese Weise lassen sich alle Einflußgrößen des Unfallhergangs berücksichtigen und der Unfall kann sehr realistisch nachgestellt werden. Durch Vergleich des tatsächlichen mit dem nachgebildeten Unfall lassen sich dann z.B. die Aussagen der Beteiligten auch im Hinblick auf die Schuldfrage überprüfen, auch falls z.B. gewisse Indizien, wie Bremsspuren, durch Verwendung von Antiblockiersytsem (ABS) fehlen. Ebenso können natürlich wie bei Crash-Tests zusätzliche Dummies im Kraftfahrzeug mitgeführt werden, um auch die Auswirkungen des Unfalls auf Fahrzeuginsassen zu überprüfen. Auch Alternativen des Unfallhergangs sind so nachbildbar, einschließlich letzter Fahrerreaktionen wie z.B. Abbremsen oder Herumreißen der Lenkung.

Der Patentanspruch 13 ist auf die erfindungsgemäße Verwendung einer Vorrichtung mit mindestens einem fahrerlosen selbstfahrenden Fahrzeug zum Überprüfen von Wirkungen eines Kraftfahrzeugunfalls gerichtet.

Die rückbezogenen Ansprüche 2 bis 12 und 14 bis 25 kennzeichnen vorteilhafte Ausführungsformen der Erfindung.

Es ist günstig, wenn die Geschwindigkeit des Kraftfahrzeugs durch ein Stellglied, z.B. durch Veränderung der Motordrehzahl bestimmt wird. Außerdem wird die Geschwindigkeit des Fahrzeuges durch Änderung der Getriebeübersetzung im Falle von Automatikgetrieben oder durch Änderung der Motordrehzahl bei Schaltgetrieben, wobei in diesem Fall in dem Gang angefahren wird, mit dem der Unfall passieren soll, verändert, das Kraftfahrzeug durch ein Stellglied gelenkt und durch Betätigung der Fahrzeugbremsen verzögert.

Auf diese Weise können alle Fahrhnktionen und Bewegungsparameter des Kraftfahrzeuges durch Einflußnahme auf den Motor, das Getriebe, die Lenkung und die Bremsen verändert werden. Da das Kraftfahrzeug nicht direkt von außen beeinflußt wird, sondern durch kraftfahrzeugeigene Einrichtungen bewegt wird, ist der Unfallhergang sehr realistisch nachbildbar. Zusätzliche Einrichtungen wie äußere Bewegungshilfen, eine Schienenführung des Fahrzeugs zum Unfallort oder eine Zwangslenkung sind nicht nötig.

Es kann von Vorteil sein, wenn zumindest ein Teil der Bewegungsparameter durch Signale von außerhalb des Kraftfahrzeuges geregelt werden, wobei die Signale über einen bordeigenen Empfänger aufgenommen und an den Bordregler zur Regelung der Parameter weitergeleitet werden. Da das Kraftfahrzeug bei dem Unfall mehr oder weniger beschädigt wird, können die Kosten für ein derartiges Nachbilden von Unfällen erheblich reduziert werden, wenn außer den wirklich notwendigen Sensor- und Regeleinrichtungen, keine zusätzlichen teuren Kontroll- oder Speichereinrichtungen im Kraftfahrzeug vorgesehen sind. Außerdem können in diesem Fall auch größere und schnellere Rechner eingesetzt werden, die eine kurzfristige Änderung der Bewegungsparameter, wie sie sich bei Beobachtungen von außen als notwendig erweisen kann, ermöglichen. Die Kommunikation mit dem Bordregler kann dabei z.B. über einen als Antenne ausgebildeten bordeigenen Empfänger stattfinden.

Das Fahrzeug wird entlang eines gemäß des aus der Praxis vorgegebenen Fahrweges auf oder in der Fahrbahnoberfläche verlegten Leitkabels geführt. Das Leitkabel ist auf jeder Fahrbahnoberfläche leicht und schnell abbringbar. Es wird vom Unfallort entsprechend der von den Fahrzeugen vor dem Unfall zurückgelegten Wege ausgelegt und den unfallbeteiligten Kraftfahrzeugen entsprechende Fahrzeuge werden entlang des Leitkabels auf den Unfallort zubewegt. Dort haben dann alle Unfallbeteiligten die vom nachzustellenden Unfall her bekannten Bewegungsgrößen und kollidieren.

Damit zu jedem Zeitpunkt während der Nachbildung des Unfalles eine optimale Kenntnis der relativen Positionen der Kraftfahrzeuge untereinander und bezüglich des Kollisionspunktes sowie einer dem tatsächlichen Unfall genau entsprechender Bewegungsablauf der Kraftfahrzeuge gegeben ist, ist es vorteilhaft, wenn aufgrund von regelmäßig im Leitkabel vorhandenen Triggermarken die augenblickliche Position des Kraftfahrzeuges oder der Kraftfahrzeuge relativ zum Kollisionspunkt durch einen mit dem Leitkabel verbundenen Regelrechner errechnet Soll- und Ist-Werte der Bewegungsparameter, sowie die relativen Positionen verglichen und Korrekturwerte an den entsprechenden Bordregler übermittelt werden. Zwischen Regelrechner und Leitkabel können bei einer Ausführungsform Leitkabelsender angeordnet sein, die die Korrekturwerte mit Hilfe des Leitkabels über die bordeigenen Empfänger der Kraftfahrzeuge an die entsprechenden Bordregler senden.

Um kurz vor und während des Unfalls einen genauen Einblick auf Bewegungsparameter wie Geschwindigkeit und Sonstige, aber auch andere Meßgrößen, wie z.B. Beschleunigung bzw. Verzögerung von die Fahrzeuginsassen darstellenden Dummies zur Überprüfung von möglichen Unfallverletzungen, zu erhalten, ist es von Vorteil, wenn beim Unfallhergang die Bewegungsparameter sowie weitere Meßgrößen aufgenommen und an einen Bordrechner zur Speicherung und späteren Auswertung übermittelt werden. Außerdem kann natürlich auch eine Übermittlung der Daten an einen außerhalb des Kraftfahrzeuges befindlichen Rechner oder Speichermedium erfolgen, um einem möglichen Datenverlust beim Unfall vorzubeugen. Außerdem kann im Bordrechner der Bordregler auch als integrierter Bestandteil ausgebildet sein.

Falls etwas Unvorhergesehenes, wie z.B. ein Hindernis auf dem durch das Leitkabel vorgegebenen Weg oder ein technischer Defekt, die Nachbildung des Unfalls be- oder gar verhindert, ist es von Vorteil, wenn bei Ausfall einer Regeleinrichtung oder einer anderen technischen Einrichtung, sowie widriger äußerer Umstände ein Not-Halt ausgelöst wird. Dies kann, wie im Falle eines auf der Fahrbahn befindlichen Hindernisses, durch Hand aber auch, wie z.B. bei einem technischen Defekt, automatisch erfolgen.

Bei einer weiteren vorteilhaften Ausführungsform der Erfindung wird das Kraftfahrzeug mit Hilfe eines Laserleitstrahls entlang eines aus der Praxis vorgegebenen Fahrweges geführt. Dazu kann ein handelsüblicher Laser eingesetzt werden, der am Fahrzeug oder außerhalb des Fahrzeuges angeordnet ist. In beiden Fällen wird das Kraftfahrzeug in Art einer Zielverfolgung an den Kollisionspunkt geführt. Beim am Fahrzeug angeordneten Laser wird zum Beispiel das Laserlicht vom Hindernis beziehungweise von einem anderen Fahrzeug gegebenenfalls mit Hilfe eines Spiegels reflektiert und der reflektierte Laserstrahl zur Steuerung des Fahrweges eingesetzt. Ebenso kann der Laser außerhalb des Fahrzeuges angeordnet sein und so das Fahrzeug entlang des Laserstrahls zur Kollision geführt werden.

Um bei der Kollision der Fahrzeuge den Laser nicht zu beschädigen, ist es günstig, wenn der Laser außerhalb des Fahrzeuges angeordnet ist und der Laserleitstrahl von einer am Kraftfahrzeug angeordneten Laserstrahlempfangseinrichtung empfangen wird. Mit Hilfe der Empfangseinrichtung können Abweichungen der Fahrzeugrichtungen und des Laserleitstrahls sowie gegebenenfalls der Abstand des Fahrzeugs zum Hindernis bestimmt werden und das Fahrzeug sowohl hinsichtlich der Richtung als auch z.B. hinsichtlich der Geschwindigkeit gesteuert werden.

In diesem Zusammenhang erweist es sich als vorteilhaft, wenn die Laserstrahlempfangseinrichtung aus einer Reihe von Photozellen gebildet wird. Aufgrund der im wesentlichen horizontalen Anordnung der Photozellen ist ein ortsempfindlicher Empfang des Laserstrahls gegeben und ein Führen entlang des durch den Laserleitstrahls vorgegebenen Fahrweges wird erleichtert.

Dabei ist es weiterhin günstig, wenn der Bordregler und/oder Bordrechner mit der Laserstrahlempfangseinrichtung verbunden ist. Mit Hilfe der von der Laserstrahlempfangseinrichtung übermittelten Signale kann der Bordregler bzw. Bordrechner eine Abweichung der Fahrzeugrichtung relativ zum Laserleitstrahl bestimmen und das Fahrzeug entlang des vorgegebenen Fahrweges führen. So ist eine schnelle und fehlerlose Führung des Fahrzeuges an den Kollisionspunkt erreicht.

Im Gegensatz zu den auf der Fahrbahnoberfläche oder in der Fahrbahn verlegten Leitkabeln sind bei Verwendung des Laserleitsystems keine zusätzlichen Arbeiten nötig.

Sollte das Kraftfahrzeug den Laserleitstrahl verlieren, so ist es günstig, wenn in diesem Fall eine Notbremsfunktion ausgelöst wird. Ein unkontrollierter Ablauf des Unfalls ist somit ausgeschlossen.

Im nachfolgenden wird die Erfindung anhand in der Zeichnung dargestellter Ausführungsbeispiele näher erläutert.

Es zeigt:
- Fig. 1: zwei Kraftfahrzeuge mit Leitkabelführung;
- Fig. 2: ein Kraftfahrzeug mit Laserspurführung;
- Fig. 3: eine Unfallsituation mit Laserspur- bzw. Leitkabelführung.

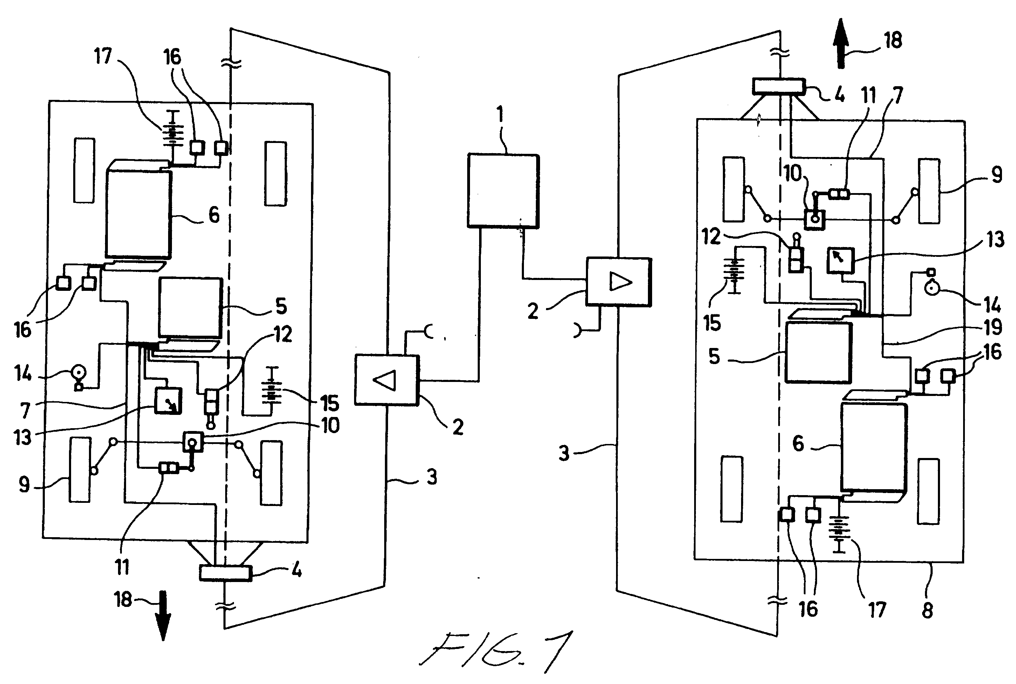

In Fig. 1 sind zwei Fahrzeuge mit einer Leitkabelführung dargestellt.

Die zur Durchführung des Verfahrens vorgesehene Vorrichtung umfaßt einen Regelrechner 1, der außerhalb des Kraftfahrzeuges, vorzugsweise stationär, angeordnet ist. Der Regelrechner 1 speichert die Soll-Werte der Bewegungsparameter des oder der Kraftfahrzeuge, die an dem nachzubildenden Unfall beteiligt sind. Außerdem dient er zur Kontrolle der jeweils tatsächlich von den Kraftfahrzeugen 8 eingehaltenen Ist-Werte der Bewegungsparameter. Der Regelrechner 1 bestimmt dabei die Abweichungen von Soll- und Ist-Werten und ermittelt die nötigen Korrekturen, die zur exakten Einhaltung der beim tatsächlichen Unfallhergang aufgetretenen Bewegungsparameter notwendig sind.

Der Regelrechner 1 ist über Datenleitungen mit Leitkabelsendern 2 verbunden. Dabei können die Leitkabelsender 2 zusätzlich auch als Empfänger ausgebildet sein. Die Leitkabelsender 2 sind zum Datenaustausch zwischen Regelrechner und Bordreglern 5 einkanalig bzw. mehrkanalig ausgebildet Durch eine Batteriepufferung sind sie unabhängig von einer äußeren Stromversorgung. Zusätzlich weist der Leitkabelsender 2 noch einen oder mehrere zusätzliche Frequenzeingänge auf, die z.B. zur Steuerung der Fahrzeuggeschwindigkeit einsetzbar sind.

Der Datenaustausch zwischen Regelrechner 1 und Bordregler 5 erfolgt dabei über mit dem Leitkabelsender 2 verbundene Leitkabel 3, die zur Führung des Kraftfahrzeuges entlang des dem Unfallhergang entsprechenden Fahrweges auf der Fahrbahnoberfläche verlegbar sind.

Durch bordeigene Empfangseinrichtungen, wie z.B. eine Antenne am Kraftfahrzeug, die vorzugsweise vorne in Fahrtrichtung angebracht ist, werden die Daten vom Leitkabel empfangen und je nach Ausführungsform auch gesendet. Von der Antenne 4 gelangen die Daten über Verbindungsleitungen 7 zum Bordregler 5. Dort werden die übermittelten Daten zur Regelung der Bewegungsparameter, wie z.B. Geschwindigkeit, Lenkung oder Bremsbetätigung, eingesetzt.

Zur Regelung der Bewegungsparameter ist der Bordregler 5 z. B. in der durch die Zeichnung dargestellten Ausführungsform mit einem Stellzylinder 11 zum Eingriff auf die Lenkung 10 der Vorderräder verbunden. So ist eine Kontrolle der Bewegungsrichtung zum Führen des Kraftfahrzeuges 8 entlang der Leitkabel 3 ebenso möglich wie ein letztes, vor dem Unfall stattgefundenes Lenkmanöver, wie z.B. ein Herumreißen der Lenkung.

Weitere Verbindungen des Bordreglers 5 sind für eine Kontrolle der Bremsbetätigung sowie der Geschwindigkeit ausgebildet. Ein Bremseingriff 12 ist zum Auslösen einer Bremsbetätigung direkt mit dem Bordregler verbunden. Durch den Bremseingriff 12 sind dabei Reaktionen des Fahrers kurz vor dem Unfall wie z.B. ein letztes Anbremsen oder eine Vollbremsung darstellbar. Zusätzlich ist der Bremseingriff 12 mit einer Notbremsfunktion ausgebildet, so daß bei Abweichung des Kraftfahrzeuges vom Leitkabel oder z.B. bei einem Ausfall einer technischen Einrichtung das Kraftfahrzeug zwangsweise abbremsbar ist.

Die Geschwindigkeit wird mit Hilfe eines Sensors 14, der im wesentlichen in Form eines Geschwindigkeitsmessers ausgebildet ist, durch den Bordregler 5 an die vorgegebenen Soll-Werte der Geschwindigkeit angepaßt. Dabei kann die Geschwindigkeitsregelung 13 direkt über einen Eingriff auf die Drosselklappe, aber auch in Form eines Serientempomats ausgebildet sein.

Die Führung des Kraftfahrzeuges 8 entlang des Leitkabels 3 erfolgt dabei im wesentlichen selbsttätig vom Fahrzeug aus, indem z.B. über die Antenne 4 auch die Spurtreue in bezug auf das Leitkabel 3 induktiv oder auf eine andere Weise kontrollierbar und gegebenenfalls durch einen Eingriff des Bordreglers 5 auf den Lenkzylinder 11 korrigierbar ist. Eine Regelung der Geschwindigkeit erfolgt auch weitgehend allein vom Kraftfahrzeug, d.h. vom Bordregler aus. Mit Hilfe des Geschwindigkeitssensors 14 ist die augenblickliche Ist-Geschwindigkeit immer bestimmbar und mit Hilfe des Bordreglers über die Geschwindigkeitsregelung 13 an die Soll-Werte anpaßbar.

Im Falle von zwei oder mehr Fahrzeugen, die von verschiedenen Richtungen zum Kollisionspunkt entsprechend der Zeichnung führbar ausgebildet sind, ist eine genaue Bestimmung der relativen Positionen zueinander und zum Kollisionspunkt einschließlich der absoluten und relativen Geschwindigkeiten, mit Hilfe von Triggermarken im Leitkabel mit Hilfe des Regelrechners 1 möglich. Die Werte werden mit den entsprechenden Soll-Werten verglichen und gegebenenfalls durch einen Eingriff auf den Bordregler 5 über Leitkabelsender 2 und Leitkabel 3 mit Hilfe des Stellzylinders 11, der Geschwindigkeitsregelung 13 und des Bremseingriffes 12 das Kraftfahrzeug an diese Soll-Werte angepaßt. Deshalb ist der Regelrechner 1 dem Bordregler 5 übergeordnet und als über den Bordregler die Bewegungsparameter regelnd ausgebildet.

Zur Unabhängigkeit der Einrichtungen im Kraftfahrzeug sind alle Funktionen, sowie auch der Bordregler 5 wie bei einem "normalen" Kraftfahrzeug von einer Fahrzeugbatterie versorgt.

Um während des Unfalls für den Unfallhergang wichtige Meßsignale zu registrieren, sind im Kraftfahrzeug weitere Sensoren 16 angeordnet Diese Sensoren 16 sind mit einem Bordrechner 6 verbunden, der zum Verarbeiten und Speichern der Meßsignale ausgebildet ist. Zusätzlich ist über Leitung 19 eine Verbindung zur Antenne bzw. zum Bordregler hergestellt. So hat der Bordrechner 6 auch Zugriff auf die Bewegungsparameter, die vom Bordregler beeinflußbar sind. Ober Antenne 4 kann so z.B. der Bordrechner 6 einschließlich der Sensoren 16 aktivierbar sein. Dabei ist der Bordrechner 6 gegebenenfalls mit einer eigenen Stromversorgung 17 ausgerüstet. Somit ist der Bordrechner 6 nicht auf die Fahrzeugbatterie 15 angewiesen und sein Einsatz ist während der gesamten Versuchsdauer gewährleistet. Zusätzlich sind Bordregler 5, Stromversorgung 17 und Sensoren 16 besonders geschützt im Kraftfahrzeug angeordnet Die von den Sensoren 16 an den Bordrechner 6 übersandten Meßwerte sind im Bordrechner 6 speicher- und später dann auswertbar.

Es ist aber auch möglich, die Meßwerte vom Bordrechner 6 simultan zur Speicherung an außerhalb des Kraftfahrzeuges, durch den Unfall nicht zerstörbare Speichereinrichtungen zu übersenden.

Je nach Ausführungsform der erfindungsgemäßen Vorrichtung zum Nachbilden von Kraftfahrzeugunfäl-len sind entsprechend der an dem Unfall beteiligten, zum Kollisionspunkt geführten Kraftfahrzeuge entsprechende identische Vorrichtungen an Bord der Kraftfahrzeuge angeordnet. Durch den übergeordneten Regelrechner 1 ist eine genaue Anpassung aller Bewegungsparameter jedes Kraftfahrzeuges sowohl an die durch den Unfallhergang gegebenen Soll-Werte als auch zur Anpassung untereinander möglich.

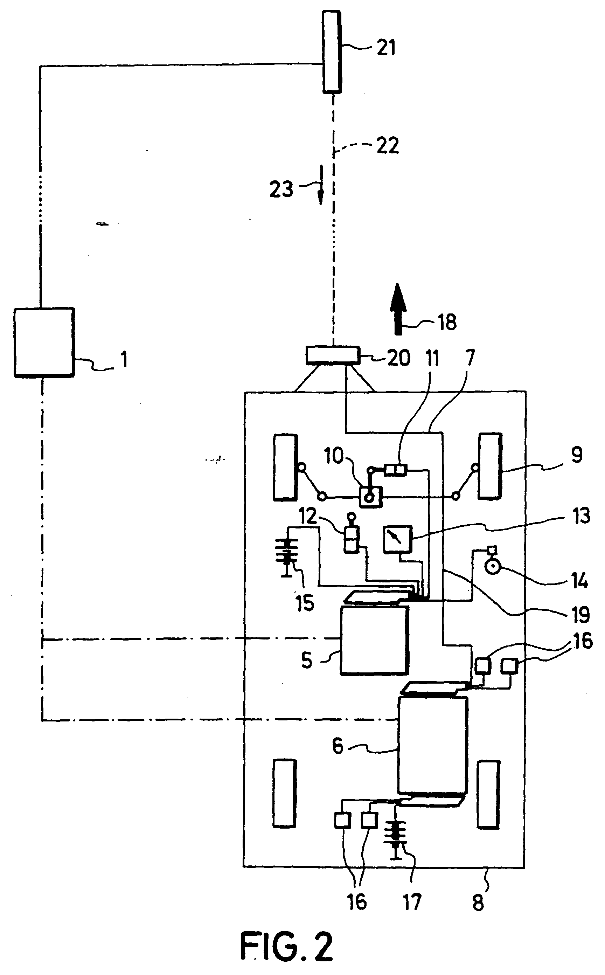

In Fig. 2 ist eine andere Ausführungsform der Erfindung dargestellt. Teile, die denen aus Fig. 1 entsprechen, weisen die gleichen Bezugszeichen auf und werden nur noch teilweise erwähnt. Bei diesem Ausführungsbeispiel ist statt der Antenne 4 aus Fig. 1 eine Laserstrahlempfangseinrichtung 20 an der Vorderseite des Fahzeugs 8 angeordnet. Diese ist mit Bordregler 5 und Bordrechner 6 verbunden. Die fahrzeuginterne Steuerung erfolgt analog zur Figurenbeschreibung zu Fig. 1 und wird im Zusammenhang mit Fig. 2 nicht erneut beschrieben.

Ein Laser 21 ist am oder in der Nähe des Kollisionspunktes angeordnet und führt das Kraftfahrzeug 8 mit Hilfe eines von der Laserstrahlempfangseinnchtung 20 empfangenen Laserleitstrahls 22 an den Kollisionspunkt heran. Eventuelle Abweichungen von Fahrrichtung 18 und Laserleitstrahlrinchtung 22 sind durch den Bordrechner 6 und/oder den Bordregler 5 entsprechend des mit Antenne und Leitkabel ausgestatteten Ausführungsbeispiels korrigierbar, so daß beide Richtungen übereinstimmen.

Der Regelrechner 1 ist außerhalb des Fahrzeugs 8 angeordnet und mit dem Laser 21 z.B. per Kabel bzw. mit den im Fahrzeug 8 angeordneten Bordregler 5 und Bordrechner 6 per Funk in Verbindung.

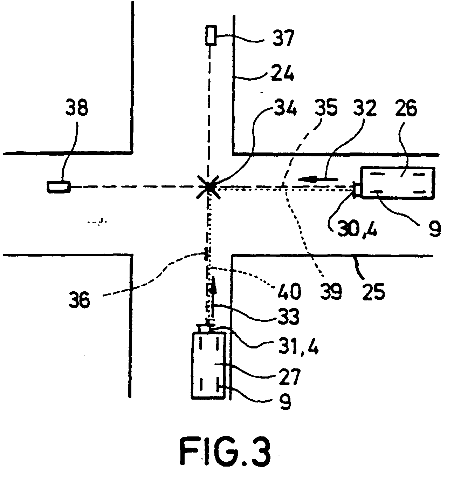

In Fig. 3 ist eine typische Unfallsituation exemplarisch dargestellt Auf zwei sich kreuzenden Straßen 24 und 25 fahren jeweils die Fahrzeuge 27 und 26 in Richtungen 33 bzw. 32. Am Kollisionspunkt 34 sollen beide aufeinander treffen. An der Vorderseite jedes Fahrzeuges 26 und 27 sind Laserstrahlempfangseinrichtungen 30 bzw. 31 angeordnet. In Verlängerung der Fahrzeugrichtungen 32 bzw. 33 von Fahrzeug 26 bzw. 27 über den Kollisionspunkt 34 hinaus, sind die Laser 38 bzw. 37 angeordnet. Diese senden Laserstrahlen 35 bzw. 36 aus, die auf die Laserstrahlempfangseindchtungen 30 bzw. 31 auftreffen. Entlang dieser Laserstrahlen 35 und 36 sind die Fahrzeuge 26 und 27 in Richtungen 35 bzw. 33 an den Kollisionspunkt 34 führbar.

Bei der Ausführungsform der Erfindung nach Fig. 1 sind auf oder in der Fahrbahn Leitkabel 39 bzw. 40 verlegt. Entlang der Leitkabel sind die Fahrzeuge 26 und 27 mit Hilfe der Antennen 4 bis zum Kollisionspunkt 34 führbar.

Es sind gemäß der Erfindung alle am Unfallablauf beteiligten Fahrzeuge jeweils mit einem Laserstrahlleitsystem, oder einem Leitkabelleitsystem, oder mit Kombinationen von beiden Leitsystemen ausbildbar.

## Patentansprüche

1. Verfahren zum Überprüfen von Wirkungen eines Kraftfahrzeug-Unfalls, bei dem wenigstens ein fahrerloses Fahrzeug an einen vorher definierten Kollisionspunkt geführt wird, wobei ein oder mehrere Fahrzeuge unter eigenem Antrieb durch bordeigene Regelung (5, 10 - 14) von Geschwindigkeit und Fahrtrichtung zur Nachbildung eines tatsächlich stattgefundenen Unfalls auf einem aus der Praxis vorgegebenen Fahrweg, gegebenenfalls unter Einschluß von Umwelteinflüssen, bewegt werden, wobei der vorgegebene Fahrweg des Fahrzeuges durch eine Leiteinrichtung vorgegeben wird, und der IST-Wert des Geschwindigkeit sowie die Abweichung von dem durch die Leiteinrichtung vorgegebenen Fahrweg durch bordeigene Sensoren ermittelt werden und im bordeigene Regler mit Sollwerten verglichen werden und aus dem Vergleiche Stellsignale zur (Beeinflussung) der Geschwindigkeit und der Lenkung errechnet werden.

2. Verfahren nach Anspruch 1, wobei die Geschwindigkeit des Fahrzeuges durch Änderung der Getriebeübersetzung verändert wird.

3. Verfahren nach einem der vorherigen Ansprüche, wobei das Kraftfahrzeug (8) durch Betätigen (12) der Fahrzeugbremsen verzögert wird.

4. Verfahren nach einem der vorherigen Ansprüche, wobei ein Teil der Bewegungsparameter durch Sollwertsignale von außerhalb des Kraftfahrzeuges (8) geregelt werden, wobei die Sollwertsignale über einen bordeigenen Empfänger (4) aufgenommen und an den Bordregler (5) zur Regelung der Parameter weitergeleitet werden.

5. Verfahren nach einem der vorherigen Ansprüche, wobei beim Unfallhergang die Bewegungsparameter sowie weitere Meßgrößen aufgenommen (16) und an einen Bordrechner (6) zur Speicherung und Auswertung übermittelt werden.

6. Verfahren nach Anspruch 1, wobei das Kraftfahrzeug (8) entlang eines gemäß des aus der Praxis vorgegebenen Fahrweges auf oder in der Fahrbahnoberfläche verlegten Leitkabels (3) geführt wird.

7. Verfahren nach Anspruch 6, wobei aufgrund von regelmäßig im Leitkabel (3) vorhandenen Triggermarken die augenblickliche Position des Kraftfahrzeuges oder der Kraftfahrzeuge relativ zum Kollisionspunkt durch einen mit dem Leitkabel (3) verbundenen Regelrechner (1) errechnet, Soll- und Ist-Wert dieser Parameter und die relativen Positionen verglichen und Korrekturwerte an den entsprechenden Bordregler (5) übermittelt werden.

8. Verfahren nach einem der Ansprüche 1 bis 5, wobei das Kraftfahrzeug mit Hilfe eines Laserleitstrahls entlang eines aus der Praxis vorgegebenen Fahrweges geführt wird.

9. Verfahren nach Anspruch 8, wobei der Laserleitstrahl von einer am Kraftfahrzeug angeordneten Laserstrahlempfangseinrichtung empfangen wird.

10. Verfahren nach Anspruch 5 und einem der Ansprüche 8 oder 9, wobei der Bordrechner mit Hilfe der von der Laserstrahlempfangseinrichtung übermittelten Signale die Lage des Fahrzeuges relativ zum Laserstrahl bestimmt und das Fahrzeug entlang des vorgegebenen Fahrweges führt.

11. Verfahren nach einem der Ansprüche 8 bis 10, wobei bei einem Verlieren des Laserleitstrahls eine Notbremsfunktion ausgelöst wird.

12. Verfahren nach einem der vorherigen Ansprüche, wobei bei Ausfall einer Regeleinrichtung oder anderer technischer Einrichtungen, sowie widriger äußerer Umstände, ein Nothalt ausgelöst wird.

13. Verwendung einer Vorrichtung mit mindestens einem fahrerlosen, selbstfahrenden Kraftfahrzeug, in dem ein Stellglied zur Geschwindigkeitsregelung, ein Stellglied für den Lenkeingriff und ein Stellglied für den Bremseingriff vorhanden und mit einem Bordregler (5) verbunden sind, wobei der Bordregler sowohl Verbindung zu Sensoren (11, 12, 14) zur Registrierung von Ist-Werten der Bewegungsparameter Geschwindigkeit, Abweichung von einem durch eine Leiteinrichtung vorgegebenen Fahrweg Bremsbetätigung aufweist als auch Verbindungen zu einer Einrichtung (1, 6), die zur Nachbildung eines tatsächlich stattgefundenen Unfalls die entsprechenden Soll-Werte speichert, zum Überprüfen von Wirkungen eines Kraftfahrzeug-Unfalls.

14. Verwendung nach Anspruch 13, bei der ein bordeigener Empfänger (4) zum Empfang der Soll-Werte der Bewegungsparameter von außerhalb des Kraftfahrzeuges befindlichen Sendeeinrichtungen (1, 2) angeordnet ist.

15. Verwendung nach Anspruch 13 oder 14, bei der im Kraftfahrzeug (8) ein mit Sensoren (16) verbundener Bordrechner (6) zur Speicherung und Auswertung von Unfalldaten angeordnet ist.

16. Verwendung nach Anspruch 15, bei der der Bordrechner (6) eine eigene Stromversorgung (17) aufweist.

17. Verwendung nach einem der Ansprüche 15 oder 16, bei der der Bordrechner (6) und Bordregler (5) als eine beide Funktionen umfassende Einrichtung ausgebildet sind.

18. Verwendung nach einem der Ansprüche 13 bis 17, bei der ein Leitkabel (3) gemäß des aus der Praxis vorgegebenen, zum Unfallort führenden Fahrweges auf oder in der Fahrbahn angeordnet ist.

19. Verwendung nach Anspruch 18, bei der am Leitkabel (3) ein Leitkabelsender (2) zur Einspeisung der Soll-Werte zumindest eines Bewegungsparameters angeordnet ist.

20. Verwendung nach Anspruch 18 oder 19, bei der am Leitkabel (3) zum relativen Positionsbestimmung zwischen dem oder den Kraftfahrzeugen (8) und dem Kollisionspunkt Triggermarken angeordnet sind.

21. Verwendung nach einem der Ansprüche 18 bis 20, bei der ein übergeordneter, die Leitkabelsender (2) mit Korrekturwerten zur Abstimmung der Relativbewegungen der Fahrzeuge versorgender Regelrechner (1) angeordnet ist.

22. Verwendung nach einem der Ansprüche 13 bis 17, bei der am Kraftfahrzeug oder außerhalb des Kraftfahrzeuges ein Spurführungslaser angeordnet ist.

23. Verwendung nach Anspruch 22, bei der zum Empfang der Laserstrahlen des Spurführungslasers am Kraftfahrzeug eine Laserstrahlempfangseinrichtung (4) angeordnet ist.

24. Verwendung nach Anspruch 23, bei der die Laserstrahlempfangseinrichtung (4) aus einer Reihe von Fotozellen gebildet ist.

25. Verwendung nach Anspruch 15 und 23 oder 24, bei der der Bordrechner (6) mit der Laserstrahlempfangseinrichtung verbunden ist.

## Claims

1. Process for examining effects of a motor vehicle accident, in which at least one driverless vehicle is brought to a previously defined collision point, one or more vehicles being self-propelled through an on-board system of control (5, 10 - 14) of speed and travelling direction for the purpose of simulating, on a course predefined by the situation in practice, with inclusion of environmental influences if appropriate, an accident which has actually occurred, the predefined course of the vehicle being governed by a guide device and the actual value of the speed and the variation from the course governed by the guide device being determined by on-board sensors and compared with setpoint values in the on-board controller and actuating signals being calculated from the comparison for the purpose of influencing the speed and the steering.

2. Process according to Claim 1, wherein the speed of the vehicle is varied by alteration of the transmission ratio.

3. Process according to any one of the preceding Claims, wherein the motor vehicle (8) is retarded by actuation (12) of the vehicle brakes.

4. Process according to any one of the preceding Claims, wherein a portion of the movement parameters are controlled by setpoint signals from outside the motor vehicle (8), the setpoint signals being received via an on-board receiver (4) and relayed to the on-board controller (5) for controlling the parameters.

5. Process according to any one of the preceding Claims, wherein the movement parameters and other measurable quantities are recorded (16) as the accident occurs and transmitted to an on-board computer (6) for storage and evaluation.

6. Process according to Claim 1, wherein the motor vehicle (8) is guided along a guide cable (3) laid on or in the carriageway surface according to a course predefined by the situation in practice.

7. Process according to Claim 6, wherein the instantaneous position of the motor vehicle or motor vehicles in relation to the collision point is calculated by a control computer (1), connected to the guide cable (3), on the basis of trigger marks situated regularly in the guide cable (3), setpoint and actual values of these parameters and the relative positions are compared and correction values are transmitted to the corresponding on-board controller (5).

8. Process according to any one of Claims 1 to 5, wherein the motor vehicle is guided with the aid of a laser guide beam along a course predefined by the situation in practice.

9. Process according to Claim 8, wherein the laser guide beam is received by a laser beam receiving device disposed on the motor vehicle.

10. Process according to Claim 5 or either of Claims 8 or 9, wherein the on-board computer determines the position of the vehicle in relation to the laser beam and guides the vehicle along the predefined course with the aid of the signals transmitted by the laser beam receiving device.

11. Process according to any one of Claims 8 to 10, wherein an emergency braking function is actuated in the event of the laser guide beam being lost.

12. Process according to any one of the preceding Claims, wherein an emergency stop is actuated in the event-of failure of a control device or other technical equipment, as well as adverse external conditions.

13. Application of an apparatus with at least one driverless, self-propelled motor vehicle in which an actuator for speed control, an actuator for steering intervention and an actuator for braking intervention are provided and are connected to an on-board controller (5), wherein, for the purpose of examining the effects of a motor vehicle accident, the on-board controller has both a connection to sensors (11, 12, 14) for registering actual values of the movement parameters of speed, variation from a course governed by a guide device and brake actuation, and connections to a device (1, 6) which stores the corresponding setpoint values for the purpose of simulating an accident which has actually occurred.

14. Application according to Claim 13, in which an on-board receiver (4) is disposed for receiving the setpoint values of the movement parameters from transmitting devices (1, 2) located outside the motor vehicle.

15. Application according to either of Claims 13 or 14, in which in the motor vehicle (8) there is disposed an on-board computer (6), connected to sensors (16), for the storage and evaluation of accident data.

16. Application according to Claim 15, in which the on-board computer (6) has its own power supply (17).

17. Application according to either of Claims 15 or 16, in which in the on-board computer (6) and on-board controller (5) are designed as a device comprising both functions.

18. Application according to any one of Claims 13 to 17, in which a guide cable (3) is disposed on or in the carriageway according to the course predefined by the situation in practice, leading to the location of the accident.

19. Application according to Claim 18, in which on the guide cable (3) there is disposed a guide cable transmitter (2) for feeding in the setpoint values of at least one movement parameter.

20. Application according to Claim 18 or 19, in which trigger marks are disposed on the guide cable (3) for relative position determination between the motor vehicle or vehicles (8) and the collision point.

21. Application according to any one of Claims 18 to 20, in which there is disposed a higher-level control computer (1) supplying the guide cable transmitters (2) with correction values for matching the relative movements of the vehicles.

22. Application according to any one of Claims 13 to 17, in which a directional control laser is disposed on the motor vehicle or outside the motor vehicle.

23. Application according to Claim 22, in which a laser beam receiving device (4) is disposed on the motor vehicle for receiving the laser beams of the directional control laser.

24. Application according to Claim 23, in which the laser beam receiving device (4) is formed from a series of photocells.

25. Application according to Claim 15 and 23 or 24, in which the on-board computer (6) is connected to the laser beam receiving device.

## Revendications

1. Procédé d'investigation des effets d'un accident de véhicule automobile, dans lequel au moins un véhicule sans conducteur est guidé vers un point de collision défini à l'avance, un ou plusieurs véhicules étant mis en mouvement avec entraînement propre sur un trajet de déplacement préétabli d'après la pratique, par régulation embarquée (5, 10-14) de la vitesse et de la direction de déplacement pour reproduire un accident effectivement survenu, en incluant éventuellement des influences de l'environnement, le trajet de déplacement préétabli du véhicule étant préétabli par un dispositif directeur, et la valeur réelle de la vitesse, ainsi que l'écart vis-à-vis du trajet de déplacement préétabli par le dispositif directeur, étant déterminés par des capteurs embarqués, et étant comparés à des valeurs de consigne dans le régulateur embarqué, et des signaux de réglage étant calculés à partir de la comparaison, en vue d'influencer la vitesse et le pilotage.

2. Procédé selon la revendication 1, dans lequel la vitesse du véhicule est modifiée par variation de la démultiplication de la transmission.

3. Procédé selon l'une des revendications précédentes, dans lequel le véhicule automobile (8) est ralenti par actionnement (12) des freins du véhicule.

4. Procédé selon l'une des revendications précédentes, dans lequel une partie des paramètres de mouvement est régulée par des signaux de valeur de consigne, de l'extérieur du véhicule automobile (8), les signaux de valeur de consigne étant captés par un récepteur embarqué (4) et étant transmis au régulateur de bord (5), en vue de réguler les paramètres.

5. Procédé selon l'une des revendications précédentes, dans lequel, lors de la survenue de l'accident, les paramètres de mouvement, ainsi que d'autres grandeurs mesurées, sont captés (16) et sont transmis à un calculateur de bord (6) en vue de la mémorisation et de l'interprétation.

6. Procédé selon la revendication 1, dans lequel le véhicule automobile (8) est guidé le long d'un câble conducteur (3) posé, sur ou dans la surface de la chaussée, en concordance avec le trajet de déplacement préétabli d'après la pratique.

7. Procédé selon la revendication 6, dans lequel, suite à la présence régulière de repères de déclenchement dans le câble conducteur (3), la position instantanée du véhicule automobile ou des véhicules automobiles par rapport au point de collision est calculée par un calculateur de régulation (1) raccordé audit câble conducteur (3), les valeurs de consigne et réelle de ces paramètres et les positions relatives sont comparées, et des valeurs correctrices sont transmises au régulateur de bord (5) correspondant.

8. Procédé selon l'une des revendications 1 à 5, dans lequel le véhicule automobile est guidé, à l'aide d'un rayon directeur laser, le long d'un trajet de déplacement préétabli d'après la pratique.

9. Procédé selon la revendication 8, dans lequel le rayon directeur laser est reçu par un dispositif récepteur de rayons laser installé sur le véhicule automobile.

10. Procédé selon la revendication 5 et l'une des revendications 8 ou 9, dans lequel, à l'aide des signaux transmis par le dispositif récepteur de rayons laser, le calculateur de bord détermine la position du véhicule par rapport au rayon laser, et guide ledit véhicule le long du trajet de déplacement préétabli.

11. Procédé selon l'une des revendications 8 à 10, dans lequel une fonction de freinage d'urgence est déclenchée lors d'une perte du rayon directeur laser.

12. Procédé selon l'une des revendications précédentes, dans lequel un arrêt d'urgence est déclenché en cas de défaillance d'un dispositif de régulation ou d'autres dispositifs techniques, ainsi que de circonstances extérieures contraires.

13. Utilisation d'un dispositif présentant au moins un véhicule automobile sans conducteur, dans lequel un organe de réglage pour la régulation de la vitesse, un organe de réglage pour la venue en prise de la direction et un organe de réglage pour la venue en prise des freins sont présents, et sont raccordés à un régulateur de bord (5), ledit régulateur de bord comportant à la fois une connexion avec des capteurs (11, 12, 14), en vue d'enregistrer des valeurs réelles des paramètres de mouvement que sont la vitesse, l'écart vis-à-vis d'un trajet de déplacement préétabli par un dispositif directeur, et l'actionnement des freins, ainsi que des connexions avec un dispositif (1, 6) qui mémorise les valeurs de consigne correspondantes, pour reproduire un accident effectivement survenu, en vue de l'investigation des effets d'un accident de véhicule automobile.

14. Utilisation selon la revendication 13, dans laquelle un récepteur embarqué (4) est installé en vue de recevoir les valeurs de consigne des paramètres de mouvement à partir de dispositifs émetteurs (1, 2) situés à l'extérieur du véhicule automobile.

15. Utilisation selon la revendication 13 ou 14, dans laquelle un calculateur de bord (6) raccordé à des capteurs (16) est installé, dans le véhicule automobile (8), en vue de la mémorisation et de l'interprétation de données relatives à l'accident.

16. Utilisation selon la revendication 15, dans laquelle le calculateur de bord (6) présente une propre alimentation en courant (17).

17. Utilisation selon l'une des revendications 15 ou 16, dans laquelle le calculateur de bord (6) et le régulateur de bord (5) sont réalisés sous la forme d'un dispositif englobant les deux fonctions.

18. Utilisation selon l'une des revendications 13 à 17, dans laquelle un câble conducteur (3) est disposé, sur ou dans la chaussée, en concordance avec le trajet de déplacement préétabli d'après la pratique et menant au lieu de l'accident.

19. Utilisation selon la revendication 18, dans laquelle un émetteur (2) est installé, sur le câble conducteur (3), en vue de mémoriser les valeurs de consigne d'au moins un paramètre de mouvement.

20. Utilisation selon la revendication 18 ou 19, dans laquelle des repères de déclenchement sont ménagés sur le câble conducteur (3), en vue de la détermination des positions relatives entre le ou les véhicule(s) automobile(s) (8) et le point de collision.

21. Utilisation selon l'une des revendications 18 à 20, dans laquelle un calculateur de régulation (1) prioritaire alimente, en valeurs correctrices, les émetteurs (2) associés aux câbles conducteurs, afin de coordonner les mouvements relatifs des véhicules.

22. Utilisation selon l'une des revendications 13 à 17, dans laquelle un laser d'alignement est installé sur le véhicule automobile ou à l'extérieur du véhicule automobile.

23. Utilisation selon la revendication 22, dans laquelle un dispositif (4) récepteur de rayons laser est installé sur le véhicule automobile, en vue de recevoir les rayons laser du laser d'alignement.

24. Utilisation selon la revendication 23, dans laquelle le dispositif (4) récepteur de rayons laser est formé d'une rangée de cellules photo-électriques.

25. Utilisation selon les revendications 15 et 23 ou 24, dans laquelle le calculateur de bord (6) est raccordé au dispositif récepteur de rayons laser.
